# FASCICULE DE BREVET EUROPEEN

(11) **EP 3 171 273 B1**
(45) Date de publication et mention de la délivrance du brevet: **06.11.2019**
(21) Numéro de dépôt: 16198905.8
(22) Date de dépôt: 15.11.2016
(51) Int. Cl.: G06F 11/14, G06F 9/445

(54) **PROCÉDÉ DE VÉRIFICATION D'INTÉGRITÉ D'UN ENSEMBLE DE DONNÉES DÉPLOYÉES SUR UNE PLURALITÉ DE DISPOSITIFS ÉLECTRONIQUES**
VERFAHREN ZUR ÜBERPRÜFUNG DER INTEGRITÄT EINES DATENSATZES, DES AUF EINE MEHRZAHL VON ELEKTRONISCHEN GERÄTEN GELADEN IST
METHOD FOR VERIFYING THE INTEGRITY OF A DATA SET DEPLOYED ON A PLURALITY OF ELECTRONIC DEVICES

(30) Priorité: 20.11.2015 FR 1561180
(43) Date de publication de la demande: 24.05.2017
(73) Titulaire: SAGEMCOM ENERGY & TELECOM SAS, 92500 Rueil-Malmaison (FR)
(72) Inventeur: LECAPPON, Jean-Paul, 92500 RUEIL MALMAISON (FR); LE GOURRIEREC, Marc, 92500 RUEIL MALMAISON (FR); ADAM, Sylvestre, 92500 RUEIL MALMAISON (FR)
(74) Mandataire: Cabinet Le Guen Maillet

(56) Documents cités:
- EP-A1- 1 835 432
- WO-A1-02/097626
- WO-A2-03/025742
- FR-A1- 2 792 740

## Description

La présente invention concerne la vérification d'intégrité d'un ensemble de données déployé sur une pluralité de dispositifs électroniques disposant de mémoires non volatiles respectives pour stocker ledit ensemble de données.

Dans le cadre de la production (« manufacturing » en anglais) ou de la mise à jour de dispositifs électroniques équipés de mémoires non volatiles respectives, des opérations d'inscription en mémoire non volatiles de données sont effectuées. Ces données sont typiquement nécessaires au bon fonctionnement de ces dispositifs électroniques, et correspondent par exemple à un logiciel d'exploitation desdits dispositifs électroniques ou à une base de données à laquelle lesdits dispositifs électroniques se réfèrent au cours des traitements opérés par lesdits dispositifs électroniques.

L'enregistrement de ces données en mémoire non volatile doit être fiable, de sorte que les dispositifs électroniques aient le comportement escompté. Or, la personne ou l'entité qui fournit les données en question peut être différente de la personne ou l'entité qui effectue le déploiement desdites données sur les dispositifs électroniques. De manière à assurer l'intégrité des données qui sont ainsi stockées en mémoire non volatile des dispositifs électroniques, il est usuel de certifier toute la chaîne de production ou de mise à jour, de manière à assurer que seuls des personnels et matériels de confiance sont impliqués dans le processus. Cette approche est toutefois coûteuse et complexe en termes d'organisation.

Une autre approche est de signer les données avec une cryptographie asymétrique, avec un certificat public stocké de manière fiable et sûre au sein de chaque dispositif électronique concerné grâce à un module matériel de sécurité HSM (« Hardware Security Module » en anglais). Le module matériel de sécurité HSM permet alors de vérifier que les données sont effectivement signées comme attendu. Cette approche est toutefois coûteuse et complexe en termes de ressources matérielles.

Encore une autre approche est de faire calculer à chacun des dispositifs électroniques un code de vérification couvrant l'intégralité des données déployées, par exemple en leur appliquant une fonction prédéfinie de hachage. Le temps de vérification de l'intégralité des dispositifs électroniques par cette approche est toutefois élevé.

On pourra noter le document de brevet WO 03/025742 A2 dans lequel il est décrit un système et un procédé de mise à jour logicielle via un réseau de communication, qui utilise une double partitionnement mémoire au sein des dispositifs électroniques qui doivent subir la mise à jour logicielle.

On pourra aussi noter le document de brevet EP 1835432 A1 dans lequel il est décrit un système et un procédé de vérification d'intégrité où une source calcule une signature par fonction de hachage sur une portion d'un contenu numérique à transférer à une destination et où la destination vérifie l'intégrité en faisant de même de son côté et en vérifiant l'adéquation des signatures.

On pourra encore noter le document de brevet WO 02/097626 A1 dans lequel il est décrit un système et un procédé de mise à jour logicielle sur un ordinateur, où des données complémentaires sont fournies au moment de la mise à jour pour permettre de vérifier la compatibilité matérielle avec la mise à jour logicielle et des codes de vérification hiérarchiques pour en vérifier l'intégrité.

On pourra enfin noter le document de brevet FR 2792740 A1 dans lequel il est décrit un système et un procédé d'installation logicielle restaurable basés sur un code de fabrication qui inclut des instructions pour rafraîchir des tables d'allocation de fichiers et un répertoire racine lors d'une interruption de téléchargement de logiciel dans une mémoire partitionnée, ainsi que des instructions pour reprendre le téléchargement sans reformater ni repartitionner la mémoire.

Il est alors souhaitable de pallier ces inconvénients de l'état de la technique, et notamment de permettre de vérifier l'intégrité d'un ensemble de données déployé, sur une pluralité de dispositifs électroniques disposant de mémoires non volatiles respectives pour stocker ledit ensemble de données, en respectant les contraintes suivantes :
- permettre la vérification d'intégrité de manière non prédictible, dans un environnement non fiable ;
- limiter le temps nécessaire à la vérification pour chaque dispositif électronique, de sorte à ne pas introduire de latence significative dans la chaîne de production, ou pour ce qui est de la mise à jour desdites données, de sorte à ne pas introduire de latence significative dans le fonctionnement nominal dudit dispositif électronique ;
- ne pas engendrer de surcoût matériel au niveau des dispositifs électroniques ; et
- être compatible avec des dispositifs électroniques qui ont une faible capacité de traitement (microcontrôleur ou microprocesseur peu puissant).

A cet effet, l'invention concerne un procédé de vérification d'intégrité d'un ensemble de données censé avoir subi un déploiement sur une pluralité de dispositifs électroniques, le procédé étant exécuté par un serveur, le procédé étant tel que ledit serveur effectue les étapes suivantes : calculer un premier code de vérification pour chaque plage d'adresses mémoire d'un ensemble de plages d'adresses mémoire, à partir dudit ensemble de données censé avoir été déployé sur la pluralité de dispositifs électroniques ; répartir les plages d'adresses mémoire parmi les dispositifs électroniques et requérir que chaque dispositif électronique calcule un second code de vérification pour la plage d'adresses mémoire qui lui est attribuée, à partir d'un ensemble de données effectivement en mémoire non volatile dudit dispositif électronique suite audit déploiement ; et vérifier, pour chaque plage d'adresse mémoire, l'adéquation entre le premier code de vérification calculé par ledit serveur et le second code de vérification calculé par chaque dispositif électronique auquel ladite plage mémoire a été attribuée. Ainsi, la vérification d'intégrité est effectuée de manière non prédictible, dans un environnement non fiable, tout en limitant le temps nécessaire à la vérification pour chaque dispositif électronique grâce à la répartition par plages d'adresses mémoire. Aucune latence significative n'est ainsi introduite pour la vérification d'intégrité du point de vue de chaque dispositif électronique, ce qui est compatible avec des dispositifs électroniques ayant une faible capacité de traitement.

Selon un mode de réalisation particulier, le premier code de vérification et le second code de vérification sont obtenus par application d'une fonction prédéfinie de hachage FH aux données de ladite plage d'adresses mémoire.

Selon un mode de réalisation particulier, le premier code de vérification et le second code de vérification sont obtenus par application d'une fonction prédéfinie de hachage FH salée (« salted hash » en anglais) par une valeur aléatoire X aux données de ladite plage d'adresses mémoire.

Selon un mode de réalisation particulier, la taille maximum de chaque plage d'adresses mémoire est définie de telle sorte que le temps de calcul, par un dispositif de performances similaires à celles desdits dispositifs électroniques, de la fonction prédéfinie de hachage FH pour ladite plage d'adresses mémoire est inférieur à un seuil TH prédéfini.

Selon un mode de réalisation particulier, lorsque le serveur détecte une inadéquation entre le premier code de vérification et le second code de vérification pour une plage d'adresses mémoire, le serveur effectue un traitement d'alarme consistant à vérifier l'intégrité des données pour la plage d'adresses mémoire concernée auprès d'autres dispositifs électroniques parmi ladite pluralité de dispositifs électroniques.

Selon un mode de réalisation particulier, le serveur définit lesdites plages d'adresses mémoire par découpe de l'espace mémoire occupé par ledit ensemble de données censé avoir subi le déploiement en plages d'adresses mémoire consécutives, et le serveur stoppe la vérification d'intégrité lorsque toutes les plages d'adresses ainsi définies ont été vérifiées au moins une certaine quantité de fois auprès desdits dispositifs électroniques.

Selon un mode de réalisation particulier, le serveur définit lesdites plages d'adresses mémoire par découpe de l'espace mémoire occupé par ledit ensemble de données censé avoir subi le déploiement en plages d'adresses mémoire ayant un chevauchement entre elles, et le serveur stoppe la vérification d'intégrité lorsque toutes les plages d'adresses ainsi définies ont été vérifiées au moins une certaine quantité de fois auprès desdits dispositifs électroniques.

Selon un mode de réalisation particulier, le serveur définit lesdites plages d'adresses mémoire de manière aléatoire, et le serveur stoppe la vérification d'intégrité lorsqu'une quantité Q de dispositifs électroniques sollicités pour la vérification d'intégrité est supérieure à un seuil prédéfini.

L'invention concerne également un serveur configuré pour effectuer une vérification d'intégrité d'un ensemble de données censé avoir subi un déploiement sur une pluralité de dispositifs électroniques, ledit serveur comportant : des moyens pour calculer un premier code de vérification pour chaque plage d'adresses mémoire d'un ensemble de plages d'adresses mémoire, à partir dudit ensemble de données censé avoir été déployé sur la pluralité de dispositifs électroniques ; des moyens pour répartir les plages d'adresses mémoire parmi les dispositifs électroniques et pour requérir que chaque dispositif électronique calcule un second code de vérification pour la plage d'adresses mémoire qui lui est attribuée, à partir d'un ensemble de données effectivement en mémoire non volatile dudit dispositif électronique suite audit déploiement ; et des moyens pour vérifier, pour chaque plage d'adresse mémoire, l'adéquation entre le premier code de vérification calculé par ledit serveur et le second code de vérification calculé par chaque dispositif électronique auquel ladite plage mémoire a été attribuée.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus, lorsque ledit programme est exécuté par le processeur. L'invention concerne également un support de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1A illustre schématiquement un premier contexte dans lequel l'invention peut être implémentée ;
- la Fig. 1B illustre schématiquement un second contexte dans lequel l'invention peut être implémentée ;
- la Fig. 2 illustre schématiquement un exemple d'architecture matérielle d'un dispositif de contrôle du système de la Fig. 1 ou de la Fig. 2 et/ou un exemple d'architecture matérielle d'un terminal à contrôler du système de la Fig. 1 ou de la Fig. 2 ; et
- la Fig. 3 illustre schématiquement un algorithme de vérification d'intégrité d'un ensemble prédéfini de données implémenté dans le contexte de la Fig. 1A ou de la Fig. 1B.

Pour vérifier l'intégrité d'un ensemble de données (*e.g*. logiciel) censé avoir subi un déploiement sur une pluralité de dispositifs électroniques, il est proposé qu'un serveur calcule un premier code de vérification pour chaque plage d'adresses mémoire d'un ensemble de plages d'adresses mémoire, à partir dudit ensemble de données censé avoir été déployé sur la pluralité de dispositifs électroniques. Le serveur répartit ensuite les plages d'adresses mémoire parmi les dispositifs électroniques et requiert que chaque dispositif électronique calcule un second code de vérification pour la plage d'adresses mémoire qui lui est attribuée, à partir d'un ensemble de données effectivement en mémoire non volatile dudit dispositif électronique suite audit déploiement. Le serveur vérifie alors, pour chaque plage d'adresse mémoire, l'adéquation entre le premier code de vérification calculé par ledit serveur et le second code de vérification calculé par chaque dispositif électronique auquel ladite plage mémoire a été attribuée. Ainsi, en répartissant les vérifications par plage d'adresses mémoire sur la pluralité de dispositifs électroniques, la sollicitation de chaque dispositif électronique est minimisée et préférentiellement rendue négligeable en termes de ressources utilisées et de latence induite.

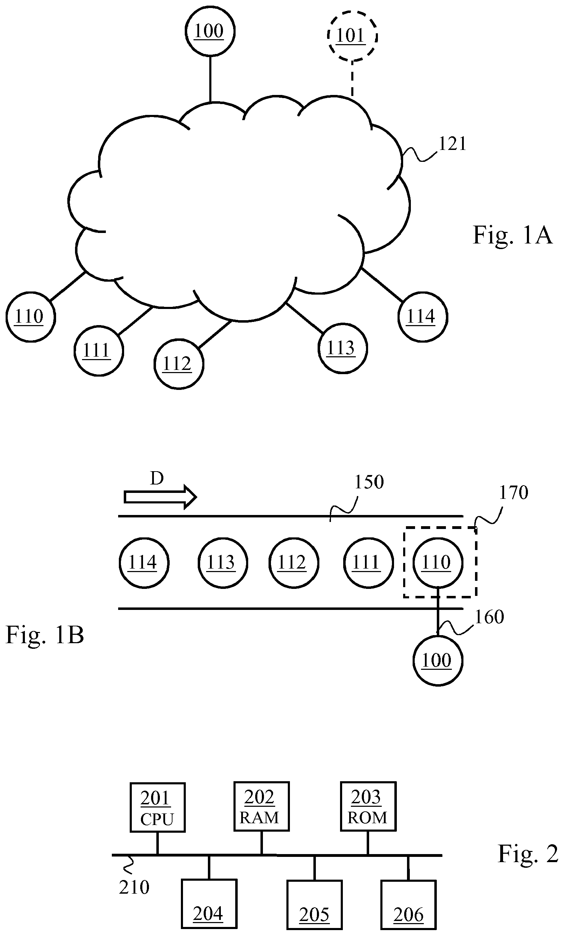

La Fig. 1A illustre schématiquement un premier contexte dans lequel l'invention peut être implémentée. La Fig. 1A représente un système comportant un réseau de communication 121, un serveur 100 et un ensemble de dispositifs électroniques 110, 111, 112, 113, 114. Le serveur 100 et les dispositifs électroniques 110, 111, 112, 113, 114 sont reliés par le réseau de communication 121. Le réseau de communication 121 est par exemple de type IP (« Internet Protocol » en anglais, tel que décrit dans le document normatif RFC 791). Le réseau de communication 121 peut aussi être à courants porteurs en ligne PLC (« PowerLine Communications » en anglais).

Les dispositifs électroniques 110, 111, 112, 113, 114 comportent des mémoires non volatiles respectives dans lesquelles un ensemble prédéfini de données est supposé avoir été stocké suite à un déploiement dudit ensemble prédéfini de données. Cet ensemble prédéfini de données est par exemple un logiciel d'exploitation permettant, lorsqu'il est exécuté par les dispositifs électroniques 110, 111, 112, 113, 114, auxdits dispositifs de fonctionner comme attendu. Cet ensemble prédéfini de données est par exemple une base de données destinée à être exploitée par les dispositifs électroniques 110, 111, 112, 113, 114 dans le cadre de leur fonctionnement. Ce logiciel et/ou cette base de données peuvent n'être qu'une partie dudit ensemble de données.

L'ensemble de données a été précédemment stocké en mémoire non volatile des dispositifs électroniques 110, 111, 112, 113, 114 par exemple en cours de production desdits dispositifs électroniques 110, 111, 112, 113, 114. Selon un autre exemple, l'ensemble de données a été précédemment stocké en mémoire non volatile des dispositifs électroniques 110, 111, 112, 113, 114 par procédure de mise à jour à partir d'un autre serveur 101 connecté au réseau de communication 121 ou à un autre réseau de communication (non représenté) permettant de communiquer avec les dispositifs électroniques 110, 111, 112, 113, 114. L'ensemble des dispositifs électroniques 110, 111, 112, 113, 114 ont préférentiellement obtenu ledit ensemble de données en suivant une seule et même procédure.

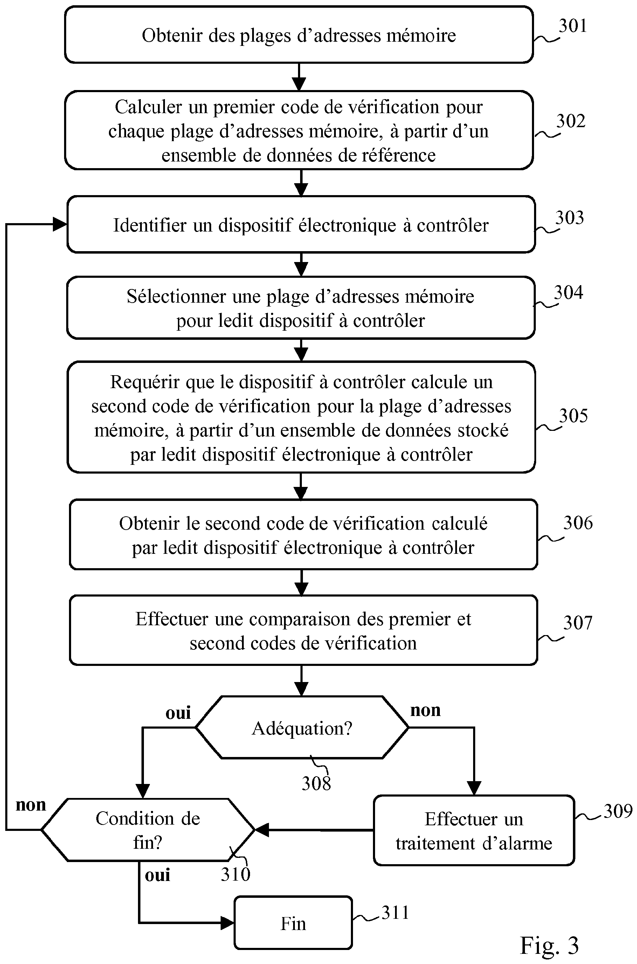

Le serveur 100 est considéré comme fiable, c'est-à-dire que ledit serveur 100 est géré ou certifié par la personne ou l'entité ayant fourni l'ensemble prédéfini de données qui est supposé avoir été précédemment déployé sur l'ensemble des dispositifs électroniques 110, 111, 112, 113, 114. Le serveur 100 dispose en référence de l'ensemble de données qui est supposé avoir été précédemment stocké en mémoire non volatile des dispositifs électroniques 110, 111, 112, 113, 114. Le serveur 100 est en charge de vérifier, en collaboration avec les dispositifs électroniques 110, 111, 112, 113, 114, l'intégrité de l'ensemble de données qui a été effectivement déployé sur lesdits dispositifs électroniques. Cet aspect est détaillé ci-après en relation avec la Fig. 3.

On considère, dans le cadre de la présente invention, que ledit ensemble prédéfini de données n'est connu que du serveur 100 et des dispositifs électroniques 110, 111, 112, 113, 114. On s'assure ainsi qu'un attaquant qui arriverait à se positionner au sein du sous-réseau de communication 121 ne peut calculer le second code de vérification en lieu et place du dispositif électronique interrogé.

La Fig. 1B illustre schématiquement un second contexte dans lequel l'invention peut être implémentée. On y retrouve le serveur 100 et les dispositifs électroniques 110, 111, 112, 113, 114. Le contexte illustré par la Fig. 1B est celui d'une ligne de production 150 où les dispositifs électroniques 110, 111, 112, 113, 114 sont fabriqués. La ligne de production 150 comporte une zone de vérification 170. La zone de vérification 170 comporte une interface (non représentée sur la Fig. 1B) permettant de connecter au serveur 100 chaque dispositif électronique situé dans ladite zone de vérification 170, par le biais d'un lien de communication 160. Le serveur 100 peut ainsi être localisé sur le site de production, ou à distance. Les dispositifs électroniques 110, 111, 112, 113, 114 sont alors successivement amenés (selon la direction D représentée sur la Fig. 1B) dans la zone de vérification 170, afin de permettre la vérification par le serveur 100, en collaboration avec les dispositifs électroniques 110, 111, 112, 113, 114, de l'intégrité de l'ensemble de données qui a été effectivement déployé sur lesdits dispositifs électroniques. Cet aspect est aussi détaillé ci-après en relation avec la Fig. 3.

La Fig. 2 illustre schématiquement un exemple d'architecture matérielle des dispositifs électroniques 110, 111, 112, 113, 114 et/ou du serveur 100. Considérons à titre illustratif que la Fig. 2 représente schématiquement l'architecture du serveur 100.

Le serveur 100 comprend alors, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage ou un lecteur de support de stockage, tel qu'un lecteur de cartes SD (« Secure Digital » en anglais) 204 ou un disque dur HDD (« Hard Disk Drive » en anglais) ; et au moins une interface de communication 205 permettant de communiquer via le réseau de communication 121 et/ou via le lien de communication 160.

Le processeur 201 est capable d'exécuter des instructions chargées dans la RAM 202 à partir de la ROM 203, d'une mémoire externe (non représentée), d'un support de stockage (tel qu'une carte SD), ou d'un réseau de communication. Lorsque le serveur 100 est mis sous tension, le processeur 201 est capable de lire de la RAM 202 des instructions et de les exécuter. Ces instructions forment un programme d'ordinateur causant la mise en œuvre, par le processeur 201, de tout ou partie du comportement décrit ci-après en relation avec la Fig. 3 vis-à-vis du serveur 100. Le même principe s'applique aux dispositifs électroniques 110, 111, 112, 113, 114. Ces instructions forment alors un programme d'ordinateur causant la mise en œuvre, par le processeur 201, de tout ou partie du comportement décrit ci-après en relation avec la Fig. 3 vis-à-vis des dispositifs électroniques 110, 111, 112, 113, 114.

Lorsque l'architecture de la Fig. 2 représente les dispositifs électroniques 110, 111, 112, 113, 114, ladite architecture comporte en outre, connectée au bus de communication 210, une mémoire non volatile 206 destinée à stocker ledit ensemble de données effectivement déployé et dont le serveur 100 est en charge d'effectuer la vérification d'intégrité.

Tout ou partie du comportement décrit ci-après en relation avec la Fig. 3 peut ainsi être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

La Fig. 3 illustre schématiquement un algorithme de vérification d'intégrité, plus particulièrement implémenté dans le contexte de la Fig. 1A ou de la Fig. 1B.

Le serveur 100 dispose d'un ensemble de données de référence qui correspond à l'ensemble de données censé avoir été déployé sur les dispositifs électroniques 110, 111, 112, 113, 114. Cet ensemble de données de référence peut être un ensemble d'instructions d'un logiciel d'exploitation des dispositifs électroniques 110, 111, 112, 113, 114. Cet ensemble de données de référence peut être un ensemble d'instructions d'un logiciel d'exploitation des dispositifs électroniques 110, 111, 112, 113, 114, auquel s'ajoute une quantité prédéfinie de valeurs par défaut. En effet, lors d'une mise à jour logicielle ou d'une installation logicielle en ligne de production, il peut être attendu que les espaces mémoires non utilisés pour le stockage d'instructions logicielles soient initialisés ou réinitialisés à une valeur par défaut (par exemple 0xFFFF pour une mémoire non volatile de seize bits de large). L'ensemble de données de référence peut aussi être une base de données ou toute autre structure de données (e.g. ensemble de paramètres de configuration) destinée à être exploitée par les dispositifs électroniques 110, 111, 112, 113, 114. Cette approche permet de détecter des situations dans lesquelles des données complémentaires inattendues ont été déployées conjointement avec ledit ensemble de données. Selon le même principe que précédemment, l'ensemble de données de référence peut être une base de données ou toute autre structure de données (*e.g*. ensemble de paramètres de configuration) destinée à être exploitée par les dispositifs électroniques 110, 111, 112, 113, 114, à laquelle s'ajoute une quantité prédéfinie de valeurs par défaut.

Dans une étape 301, le serveur 100 obtient une découpe de l'ensemble de données de référence en plages d'adresses mémoire. Comme décrit par la suite, ces plages d'adresses mémoire servent à répartir entre les dispositifs électroniques 110, 111, 112, 113, 114, la charge de la vérification de l'intégrité de l'ensemble de données effectivement déployé sur lesdits dispositifs électroniques.

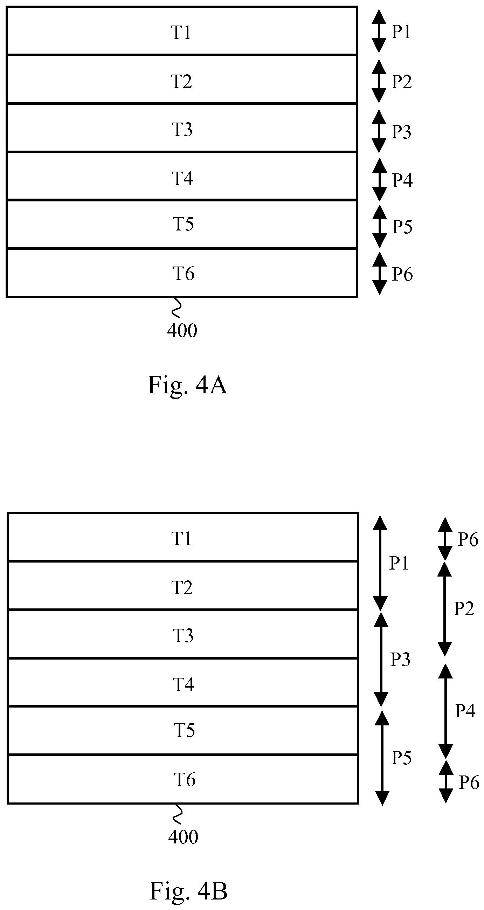

Des exemples d'une telle découpe en plages d'adresses mémoire sont représentés sur les Figs. 4A et 4B. Sur les Figs. 4A et 4B, l'ensemble de données de référence est découpé en six tronçons, numérotés de T1 à T6, par simplification de représentation. Sur la Fig.4A, une plage d'adresses mémoire P1 correspond au tronçon T1, une plage d'adresses mémoire P2 correspond au tronçon T2, une plage d'adresses mémoire P3 correspond au tronçon T3, une plage d'adresses mémoire P4 correspond au tronçon T4, une plage d'adresses mémoire P5 correspond au tronçon T5, et une plage d'adresses mémoire P6 correspond au tronçon T6. La découpe est ainsi faite en plages d'adresses mémoire successives, sans chevauchement des plages d'adresses mémoire entre elles, de sorte que l'intégralité dudit ensemble de données de référence soit couvert par l'ensemble desdites plages d'adresses mémoire. Sur la Fig. 4B, la plage d'adresses mémoire P1 correspond à l'ensemble formé par les tronçons T1 et T2, la plage d'adresses mémoire P2 correspond à l'ensemble formé par les tronçons T2 et T3, la plage d'adresses mémoire P3 correspond à l'ensemble formé par les tronçons T3 et T4, la plage d'adresses mémoire P4 correspond à l'ensemble formé par les tronçons T4 et T5, la plage d'adresses mémoire P5 correspond à l'ensemble formé par les tronçons T5 et T6, et la plage d'adresses mémoire P6 correspond à l'ensemble formé par les tronçons T1 et T6. La découpe est ainsi faite en plages d'adresses mémoire avec chevauchement desdites plages d'adresses mémoire entre elles, de sorte à apporter de la redondance, et de sorte que l'intégralité dudit ensemble de données de référence soit couvert par l'ensemble desdites plages d'adresses mémoire. Les adresses de chaque plage d'adresses mémoire ne sont donc pas nécessairement consécutives.

En variante de réalisation, les plages d'adresses mémoire sont définies par le serveur 100 de manière aléatoire. Cet aspect sera abordé plus en détail ci-après.

La taille maximum que peut prendre chaque plage d'adresses mémoire est préférentiellement définie de telle sorte que le temps de calcul, par un dispositif (e.g. processeur) de performances similaires à celles des dispositifs électroniques 110, 111, 112, 113, 114, d'une fonction prédéfinie de hachage FH appliquée aux données contenues dans ladite plage d'adresses mémoire est inférieur à un seuil TH prédéfini. Le seuil TH définit le temps maximum que peut prendre l'intervention du dispositif électronique considéré pour permettre la vérification d'intégrité par le serveur 100 sans que cette intervention ne soit considérée comme une latence perturbante vis-à-vis de la chaîne de production (dans le contexte de la Fig. 1B), ou vis-à-vis du fonctionnement nominal dudit dispositif électronique considéré (dans le contexte de la Fig. 1A).

Dans une étape 302 suivante, le serveur 100 calcul un premier code de vérification pour chaque plage d'adresses mémoire définie à l'étape 301. Le premier code de vérification est obtenu par application de la fonction prédéfinie de hachage FH aux données dudit ensemble de données de référence qui sont contenues dans la plage d'adresses mémoire à laquelle ledit code de vérification correspond.

Dans un mode de réalisation particulier, le premier code de vérification est obtenu par application de la fonction prédéfinie de hachage FH salée par une valeur aléatoire X aux données dudit ensemble de données de référence qui sont contenues dans la plage d'adresses mémoire à laquelle ledit code de vérification correspond. Le salage est une méthode renforçant la sécurité des informations qui sont destinées à être hachées en y adjoignant une donnée supplémentaire afin d'empêcher que deux informations identiques conduisent à une même empreinte résultant de l'application de la fonction de hachage.

Dans une étape 303 suivante, le serveur 100 identifie un dispositif électronique à contrôler. Dans le contexte de la Fig. 1A, le serveur 100 sélectionne un dispositif électronique, e.g. arbitrairement, parmi les dispositifs électroniques 110, 111, 112, 113, 114. Dans le contexte de la Fig. 1B, le serveur 100 sélectionne le dispositif électronique situé dans la zone de vérification 170.

Dans une étape 304 suivante, le serveur 100 sélectionne, *e.g*. arbitrairement, une plage d'adresses mémoire parmi les plages d'adresses mémoire obtenues à l'étape 301.

Dans une étape 305 suivante, le serveur 100 requiert que le dispositif électronique identifié à l'étape 303 calcule un second code de vérification pour la plage d'adresses mémoire sélectionnée à l'étape 304. Le serveur 100 envoie donc au dispositif électronique identifié à l'étape 303 un message contenant une information représentative de ladite plage d'adresses mémoire sélectionnée à l'étape 304 et requérant que ledit dispositif électronique procède au calcul du second code de vérification. Sur réception dudit message, ledit dispositif électronique calcule le second code de vérification pour ladite plage d'adresses mémoire, à partir de l'ensemble des données qui sont stockées en mémoire non volatile dudit dispositif électronique et qui sont supposées correspondre à l'ensemble des données de référence dont dispose le serveur 100. Le second code de vérification est ainsi obtenu par application de la fonction prédéfinie de hachage FH aux données dudit ensemble de données qui sont stockées en mémoire non volatile dudit dispositif électronique et qui sont supposées correspondre à l'ensemble des données de référence dont dispose le serveur 100 dans ladite plage d'adresses mémoire.

Dans le mode de réalisation particulier abordé en relation avec l'étape 302, le serveur 100 fournit en outre au dispositif électronique identifié à l'étape 303 la valeur aléatoire X qui a été utilisée par le serveur 100 pour obtenir le premier code de vérification pour ladite plage d'adresses mémoire. Le second code de vérification est alors obtenu par application de la fonction prédéfinie de hachage FH salée par ladite valeur aléatoire X aux données qui sont stockées en mémoire non volatile dudit dispositif électronique et qui sont supposées correspondre à l'ensemble des données de référence dont dispose le serveur 100 dans ladite plage d'adresses mémoire. La valeur aléatoire X permet de rendre moins prédictible le calcul du second code de vérification, y compris dans le cas où une même plage d'adresses mémoire est sélectionnée pour deux dispositifs électroniques distincts.

Dans une étape 306 suivante, le serveur 100 obtient le second code de vérification requis à l'étape 305.

Dans une étape 307 suivante, le serveur 100 compare le premier code de vérification obtenu à l'étape 302 pour la plage d'adresses mémoire sélectionnée à l'étape 304 et le second code de vérification obtenu à l'étape 306. Si l'ensemble de données stocké en mémoire du dispositif électronique sélectionné à l'étape 303 est le même que l'ensemble de données de référence connu du serveur 100 (*i.e.* celui qui est supposé avoir été déployé), alors ledit second code de vérification est identique audit premier code de vérification. Si un autre ensemble de données que ledit ensemble de données de référence a été déployé, il existe au moins une plage mémoire pour laquelle ledit second code de vérification est différent dudit premier code de vérification.

Dans une étape 308 suivante, le serveur 100 vérifie s'il y a adéquation (« match » en anglais) entre le premier code de vérification obtenu à l'étape 302 pour la plage d'adresses mémoire sélectionnée à l'étape 304 et le second code de vérification obtenu à l'étape 306. Si tel est le cas, une étape 310 est effectuée ; sinon, une étape 309 est effectuée.

Dans l'étape 309, le serveur 100 détecte une anomalie dans l'ensemble de données effectivement déployé auprès des dispositifs électroniques 110, 111, 112, 113, 114. Le serveur 100 effectue alors en conséquence un traitement d'alarme.

Dans un mode de réalisation particulier, le traitement d'alarme consiste à vérifier l'intégrité des données pour la plage d'adresses mémoire concernée auprès d'autres dispositifs électroniques. Le serveur 100 requiert alors auprès d'autres dispositifs électroniques de calculer le second code de vérification pour ladite plage d'adresses mémoire et, sur réception du second code de vérification de la part de chaque tel dispositif électronique, le serveur 100 détermine si la divergence détectée par rapport à l'ensemble de données de référence est isolée ou si cette divergence reflète une erreur de déploiement dudit ensemble de données.

D'autres traitements d'alarme peuvent être appliqués : inscription de l'alarme dans un fichier journal (« log file » en anglais), envoi d'un message à un opérateur ou à un serveur de contrôle, exclusion du dispositif électronique concerné (exclusion du réseau de communication 121 ou de la chaîne de production 150 selon le contexte considéré). L'étape 310 est ensuite effectuée. Une étape 311 peut, en variante, être effectuée, de manière à stopper la vérification d'intégrité et donc à mettre fin à l'algorithme de la Fig. 3.

Dans l'étape 310, le serveur 100 vérifie si une condition de fin de vérification d'intégrité est remplie. Une autre telle condition de fin de vérification d'intégrité est que chaque plage d'adresses mémoire obtenue à l'étape 301 a été vérifiée au moins une certaine quantité de fois (*e.g.* au moins une fois).

Dans le mode de réalisation particulier déjà évoqué dans lequel les plages d'adresses sont définies aléatoirement, une telle condition de fin de vérification d'intégrité est qu'une quantité prédéfinie Q de dispositifs électroniques a été sollicitée pour obtenir le second code de vérification pour des plages d'adresses mémoire aléatoires respectives, ladite quantité Q étant fixée de sorte que la probabilité que l'intégralité dudit ensemble de données ait été vérifié soit supérieure à un seuil prédéfini.

Si la condition de fin de vérification d'intégrité est remplie, l'étape 311 est effectuée ; sinon, l'étape 303 est réitérée en sélectionnant un autre dispositif à contrôler. Dans le contexte de la Fig. 1A, le serveur 100 sélectionne un autre dispositif électronique, e.g. arbitrairement, parmi les dispositifs électroniques 110, 111, 112, 113, 114, préférentiellement parmi ceux n'ayant pas encore été sollicités.

Dans le contexte de la Fig. 1B, le serveur 100 sélectionne le prochain dispositif électronique à être situé dans la zone de vérification 170.

## Revendications

1. Procédé de vérification d'intégrité d'un ensemble de données censé avoir subi un déploiement sur chaque dispositif électronique d'une pluralité de dispositifs électroniques (110, 111, 112, 113, 114), le procédé étant exécuté par un serveur (100), **caractérisé en ce que** ledit serveur effectue les étapes suivantes :
- calculer (302) un premier code de vérification pour chaque plage d'adresses mémoire d'un ensemble de plages d'adresses mémoire, à partir dudit ensemble de données censé avoir été déployé sur la pluralité de dispositifs électroniques ;
- répartir (304) les plages d'adresses mémoire parmi les dispositifs électroniques et requérir (305) que chaque dispositif électronique calcule un second code de vérification pour la plage d'adresses mémoire qui lui est attribuée, à partir d'un ensemble de données effectivement en mémoire non volatile dudit dispositif électronique suite audit déploiement ; et
- vérifier (308), pour chaque plage d'adresses mémoire, l'adéquation entre le premier code de vérification calculé par ledit serveur et le second code de vérification calculé par chaque dispositif électronique auquel ladite plage mémoire a été attribuée.

2. Procédé selon la revendication 1, **caractérisé en ce que** le premier code de vérification et le second code de vérification sont obtenus par application d'une fonction prédéfinie de hachage FH aux données de ladite plage d'adresses mémoire.

3. Procédé selon la revendication 1, **caractérisé en ce que** le premier code de vérification et le second code de vérification sont obtenus par application d'une fonction prédéfinie de hachage FH salée par une valeur aléatoire X aux données de ladite plage d'adresses mémoire.

4. Procédé selon l'une quelconque des revendications 2 et 3, **caractérisé en ce que** la taille maximum de chaque plage d'adresses mémoire est définie de telle sorte que le temps de calcul, par un dispositif de performances similaires à celles desdits dispositifs électroniques, de la fonction prédéfinie de hachage FH pour ladite plage d'adresses mémoire est inférieur à un seuil TH prédéfini.

5. Procédé selon l'une quelconque des revendications 1 à 4, **caractérisé en ce que**, lorsque le serveur détecte une inadéquation entre le premier code de vérification et le second code de vérification pour une plage d'adresses mémoire, le serveur effectue (309) un traitement d'alarme consistant à vérifier l'intégrité des données pour la plage d'adresses mémoire concernée auprès d'autres dispositifs électroniques parmi ladite pluralité de dispositifs électroniques.

6. Procédé selon l'une quelconque des revendications 1 à 5, **caractérisé en ce que** le serveur définit lesdites plages d'adresses mémoire par découpe de l'espace mémoire occupé par ledit ensemble de données censé avoir subi le déploiement en plages d'adresses mémoire consécutives, et **en ce que** le serveur stoppe (311) la vérification d'intégrité lorsque toutes les plages d'adresses ainsi définies ont été vérifiées au moins une certaine quantité de fois auprès desdits dispositifs électroniques.

7. Procédé selon l'une quelconque des revendications 1 à 5, **caractérisé en ce que** le serveur définit lesdites plages d'adresses mémoire par découpe de l'espace mémoire occupé par ledit ensemble de données censé avoir subi le déploiement en plages d'adresses mémoire ayant un chevauchement entre elles, et **en ce que** le serveur stoppe (311) la vérification d'intégrité lorsque toutes les plages d'adresses ainsi définies ont été vérifiées au moins une certaine quantité de fois auprès desdits dispositifs électroniques.

8. Procédé selon l'une quelconque des revendications 1 à 5, **caractérisé en ce que** le serveur définit lesdites plages d'adresses mémoire de manière aléatoire, et **en ce que** le serveur stoppe (311) la vérification d'intégrité lorsqu'une quantité Q de dispositifs électroniques sollicités pour la vérification d'intégrité est supérieure à un seuil prédéfini.

9. Produit programme d'ordinateur, **caractérisé en ce qu'**il comporte des instructions entraînant l'exécution par un serveur du procédé selon l'une quelconque des revendications 1 à 8, lorsque lesdites instructions sont exécutées par un processeur dudit serveur.

10. Support de stockage, **caractérisé en ce qu'**il stocke un programme d'ordinateur comportant des instructions entraînant l'exécution par un serveur du procédé selon l'une quelconque des revendications 1 à 8, lorsque lesdites instructions sont exécutées par un processeur dudit serveur.

11. Serveur (100) configuré pour effectuer une vérification d'intégrité d'un ensemble de données censé avoir subi un déploiement sur chaque dispositif électronique d'une pluralité de dispositifs électroniques (110, 111, 112, 113, 114), **caractérisé en ce que** ledit serveur comporte :
- des moyens pour calculer (302) un premier code de vérification pour chaque plage d'adresses mémoire d'un ensemble de plages d'adresses mémoire, à partir dudit ensemble de données censé avoir été déployé sur la pluralité de dispositifs électroniques ;
- des moyens pour répartir (304) les plages d'adresses mémoire parmi les dispositifs électroniques et pour requérir (305) que chaque dispositif électronique calcule un second code de vérification pour la plage d'adresses mémoire qui lui est attribuée, à partir d'un ensemble de données effectivement en mémoire non volatile dudit dispositif électronique suite audit déploiement ; et
- des moyens pour vérifier (308), pour chaque plage d'adresse mémoire, l'adéquation entre le premier code de vérification calculé par ledit serveur et le second code de vérification calculé par chaque dispositif électronique auquel ladite plage mémoire a été attribuée.

## Patentansprüche

1. Verfahren zur Überprüfung der Integrität eines Datensatzes, von dem angenommen wird, dass er auf jedes elektronische Gerät einer Vielzahl von elektronischen Geräten (110, 111, 112, 113, 114) geladen wurde, wobei das Verfahren von einem Server (100) ausgeführt wird, **dadurch gekennzeichnet, dass** der Server die folgenden Schritte durchführt:
- Berechnen (302) eines ersten Überprüfungscodes für jeden Speicheradressbereich eines Speicheradressbereichssatzes ausgehend von dem Datensatz, von dem angenommen wird, dass er auf die Vielzahl von elektronischen Geräten geladen worden ist;
- Verteilen (304) der Speicheradressbereiche auf die elektronischen Geräte und Anfordern (305), dass jedes elektronische Gerät einen zweiten Überprüfungscode für den ihm zugewiesenen Speicheradressbereich ausgehend von einem Datensatz berechnet, der nach dem Laden tatsächlich im nichtflüchtigen Speicher des elektronischen Geräts ist; und
- Überprüfen (308), für jeden Speicheradressbereich, der Übereinstimmung zwischen dem vom Server berechneten ersten Überprüfungscode und dem von jedem elektronischen Gerät, dem der Speicherbereich zugewiesen wurde, berechneten zweiten Überprüfungscode.

2. Verfahren nach Anspruch 1, **dadurch gekennzeichnet, dass** der erste Überprüfungscode und der zweite Überprüfungscode durch Anwenden einer vorgegebenen Hashfunktion FH auf die Daten des Speicheradressbereichs erhalten werden.

3. Verfahren nach Anspruch 1, **dadurch gekennzeichnet, dass** der erste Überprüfungscode und der zweite Überprüfungscode durch Anwenden einer vorgegebenen, mit einem Zufallswert X gesalzenen Hashfunktion FH auf die Daten des Speicheradressbereichs erhalten werden.

4. Verfahren nach einem der Ansprüche 2 und 3, **dadurch gekennzeichnet, dass** die maximale Größe jedes Speicheradressbereichs derart definiert ist, dass die Zeit für die Berechnung der vorgegebenen Hashfunktion FH für den Speicheradressbereich durch ein Gerät mit ähnlichen Leistungen wie denen der elektronischen Geräte unter einem vorgegebenen Schwellenwert TH liegt.

5. Verfahren nach einem der Ansprüche 1 bis 4, **dadurch gekennzeichnet, dass**, wenn der Server eine Nichtübereinstimmung zwischen dem ersten Überprüfungscode und dem zweiten Überprüfungscode für einen Speicheradressbereich erkennt, der Server eine Alarmverarbeitung durchführt (309), die darin besteht, die Integrität der Daten für den betroffenen Speicheradressbereich bei weiteren elektronischen Geräten unter der Vielzahl von elektronischen Geräten zu überprüfen.

6. Verfahren nach einem der Ansprüche 1 bis 5, **dadurch gekennzeichnet, dass** der Server die Speicheradressbereiche durch Zerteilen des Speicherplatzes, der von dem Datensatz belegt wird, von dem angenommen wird, dass er geladen wurde, in aufeinander folgende Speicheradressbereiche definiert und dass der Server die Integritätsüberprüfung stoppt (311), wenn alle so definierten Adressbereiche mindestens eine bestimmte Menge von Malen bei den elektronischen Geräten überprüft worden sind.

7. Verfahren nach einem der Ansprüche 1 bis 5, **dadurch gekennzeichnet, dass** der Server die Speicheradressbereiche durch Zerteilen des Speicherplatzes, der von dem Datensatz belegt wird, von dem angenommen wird, dass er geladen wurde, in sich überlappende Speicheradressbereiche definiert und dass der Server die Integritätsüberprüfung stoppt (311), wenn alle so definierten Adressbereiche mindestens eine bestimmte Menge von Malen bei den elektronischen Geräten überprüft worden sind.

8. Verfahren nach einem der Ansprüche 1 bis 5, **dadurch gekennzeichnet, dass** der Server die Speicheradressbereiche zufällig definiert und dass der Server die Integritätsüberprüfung stoppt (311), wenn eine Menge Q von elektronischen Geräten, die zur Integritätsüberprüfung aufgefordert wurden, über einem vorgegebenen Schwellenwert liegt.

9. Computerprogrammprodukt, **dadurch gekennzeichnet, dass** es Befehle umfasst, die zur Ausführung des Verfahrens nach einem der Ansprüche 1 bis 8 durch einen Server führen, wenn die Befehle von einem Prozessor des Servers ausgeführt werden.

10. Speichermedium, **dadurch gekennzeichnet, dass** es ein Computerprogramm speichert, das Befehle umfasst, die zur Ausführung des Verfahrens nach einem der Ansprüche 1 bis 8 durch einen Server führen, wenn die Befehle von einem Prozessor des Servers ausgeführt werden.

11. Server (100), der dazu konfiguriert ist, eine Überprüfung der Integrität eines Datensatzes durchzuführen, von dem angenommen wird, dass er auf jedes elektronische Gerät einer Vielzahl von elektronischen Geräten (110, 111, 112, 113, 114) geladen wurde, **dadurch gekennzeichnet, dass** der Server umfasst:
- Einrichtungen zum Berechnen (302) eines ersten Überprüfungscodes für jeden Speicheradressbereich eines Speicheradressbereichssatzes ausgehend von dem Datensatz, von dem angenommen wird, dass er auf die Vielzahl von elektronischen Geräten geladen worden ist;
- Einrichtungen zum Verteilen (304) der Speicheradressbereiche auf die elektronischen Geräte und zum Anfordern (305), dass jedes elektronische Gerät einen zweiten Überprüfungscode für den ihm zugewiesenen Speicheradressbereich ausgehend von einem Datensatz berechnet, der nach dem Laden tatsächlich im nichtflüchtigen Speicher des elektronischen Geräts ist; und
- Einrichtungen zum Überprüfen (308), für jeden Speicheradressbereich, der Übereinstimmung zwischen dem vom Server berechneten ersten Überprüfungscode und dem von jedem elektronischen Gerät, dem der Speicherbereich zugewiesen wurde, berechneten zweiten Überprüfungscode.

## Claims

1. Method for verifying the integrity of a dataset supposed to have been deployed on each electronic device of a plurality of electronic devices (110, 111, 112, 113, 114), the method being executed by a server (100), **characterized in that** said server performs the following steps:
- calculating (302) a first verification code for each memory address range of a set of memory address ranges, from said dataset supposed to have been deployed on the plurality of electronic devices;
- distributing (304) the memory address ranges among the electronic devices and requesting (305) that each electronic device calculates a second verification code for the memory address range that is assigned thereto, from a dataset effectively in the non-volatile memory of said electronic device following said deployment; and
- verifying (308), for each memory address range, the match between the first verification code calculated by said server and the second verification code calculated by each electronic device to which said memory range has been assigned.

2. Method according to Claim 1, **characterized in that** the first verification code and the second verification code are obtained by applying a predefined hash function FH to the data of said memory address range.

3. Method according to Claim 1, **characterized in that** the first verification code and the second verification code are obtained by applying a predefined hash function FH, salted by a random value X, to the data of said memory address range.

4. Method according to either one of Claims 2 and 3, **characterized in that** the maximum size of each memory address range is defined such that the calculation time, for a device having a performance similar to that of said electronic devices, for the predefined hash function FH for said memory address range is less than a predefined threshold TH.

5. Method according to any one of Claims 1 to 4, **characterized in that**, when the server detects a mismatch between the first verification code and the second verification code for a memory address range, the server performs (309) alarm processing, consisting in verifying the integrity of the data for the memory address range in question with other electronic devices from among said plurality of electronic devices.

6. Method according to any one of Claims 1 to 5, **characterized in that** the server defines said memory address ranges by dividing the memory space, occupied by said dataset supposed to have been deployed, into consecutive memory address ranges, and **in that** the server stops (311) the integrity verification when all of the address ranges thus defined have been verified at least a certain number of times by said electronic devices.

7. Method according to any one of Claims 1 to 5, **characterized in that** the server defines said memory address ranges by dividing the memory space, occupied by said dataset supposed to have been deployed, into memory address ranges that overlap one another, and **in that** the server stops (311) the integrity verification when all of the address ranges thus defined have been verified at least a certain number of times by said electronic devices.

8. Method according to any one of Claims 1 to 5, **characterized in that** the server defines said memory address ranges randomly, and **in that** the server stops (311) the integrity verification when a number Q of electronic devices called upon for the integrity verification is greater than a predefined threshold.

9. Computer program product, **characterized in that** it contains instructions that lead to the execution, by a server, of the method according to any one of Claims 1 to 8 when said instructions are executed by a processor of said server.

10. Storage medium, **characterized in that** it stores a computer program containing instructions that lead to the execution, by a server, of the method according to any one of Claims 1 to 8 when said instructions are executed by a processor of said server.

11. Server (100) configured so as to verify the integrity of a dataset supposed to have been deployed on each electronic device of a plurality of electronic devices (110, 111, 112, 113, 114), **characterized in that** said server includes:
- means for calculating (302) a first verification code for each memory address range of a set of memory address ranges, from said dataset supposed to have been deployed on the plurality of electronic devices;
- means for distributing (304) the memory address ranges among the electronic devices and requesting (305) that each electronic device calculates a second verification code for the memory address range that is assigned thereto, from a dataset effectively in the non-volatile memory of said electronic device following said deployment; and
- means for verifying (308), for each memory address range, the match between the first verification code calculated by said server and the second verification code calculated by each electronic device to which said memory range has been assigned.
